# EUROPÄISCHE PATENTSCHRIFT

(11) **EP 3 001 892 B1**
(45) Veröffentlichungstag und Bekanntmachung des Hinweises auf die Patenterteilung: **14.06.2017**
(21) Anmeldenummer: 15182113.9
(22) Anmeldetag: 24.08.2015
(51) Int. Cl.: A01D 45/02

(54) **MAISERNTEGERÄT MIT PFLANZENSTOPPELZIEHER UND -HÄCKSLER**
MAIZE HARVESTING DEVICE WITH PLANT STUBBLE PULLER AND SHREDDER
APPAREIL DE MOISSONNAGE DE MAÏS COMPRENANT UN DECHAUMEUR ET HACHE-PAILLES

(30) Priorität: 29.09.2014 DE 102014219694
(43) Veröffentlichungstag der Anmeldung: 06.04.2016
(73) Patentinhaber: Maschinenfabrik Kemper GmbH & Co. KG, 48703 Stadtlohn (DE)
(72) Erfinder: Nordhoff, Hendrik, 48727 Billerbeck (DE); Icking, Bernd, 48703 Stadtlohn (DE)
(74) Vertreter: Holst, Sönke

(56) Entgegenhaltungen:
- EP-A1- 1 566 092
- AT-B- 301 234
- DE-A1- 1 457 996
- DE-A1- 3 515 295

## Beschreibung

Die vorliegende Erfindung bezieht sich auf eine Reiheneinheit für ein Maiserntegerät.

### Technologischer Hintergrund

Für die Maisernte werden so genannte Pflücker eingesetzt, die sich aus nebeneinander angeordneten Reiheneinheiten aufbauen, in welchen die Pflanzen durch Pflückwalzen nach unten eingezogen und die Kolben von den Stängeln abgestreift und anschließend durch Fördermittel zur weiteren Verarbeitung in eine Erntemaschine abtransportiert werden. Die Stängel können durch separate Häcksler oder Messer der Pflückwalzen zerkleinert werden und bleiben als Häckselgut auf dem Feld liegen. Die Pflanzenstoppeln, d.h. die Wurzeln mit den unteren, oberirdischen Stängelabschnitten bleiben ebenfalls auf dem Feld stehen.

Diese Stoppeln dienen den Raupen des gefürchteten Maiszünslers (*Ostrinia nubilalis*) als Überwinterungsraum. Die Raupen verpuppen sich im Frühling und fliegen bald danach als Schmetterlinge aus, um ihre Eier an den Blattunterseiten der Maispflanzen abzulegen. Nach dem Schlüpfen frisst sich die neue Generation der Raupen in die Stängel der Pflanzen, wo sie gegen Fressfeinde und Insektizide geschützt sind, und bis in die Stoppeln, woraufhin der Zyklus von neuem beginnt. Die Pflanzen werden durch die Maiszünsler schwer geschädigt, sodass der Landwirt hohe Ernteverluste erleidet.

Aus diesem Grunde wurde vorgeschlagen, die Pflanzenstoppeln bei der Maisernte mechanisch zu zerfasern (vgl. beispielsweise DE 10 2012 206 720 A1) oder sie während des Erntevorgangs einer thermischen Nachbehandlung zu unterziehen (DE 10 2007 043 236 A1). Weiterhin besteht die Möglichkeit, die Pflanzenstoppeln in einem zweiten Arbeitsgang mittels einer speziellen Maschine durch Scheibenschare aus dem Boden herauszuziehen und einem Häcksler zuzuführen, der die gehäckselten Pflanzen wieder auf dem Feld verteilt (DE 10 2010 052 594 A1).

Die EP 1 566 092 A1 zeigt einen Maispflücker mit einem unterhalb der Pflückwalzen angeordneten, um die Hochachse rotierenden Stängelhäcksler.

### Aufgabe

Die vorliegende Erfindung hat sich zur Aufgabe gesetzt, ein Maiserntegerät zu schaffen, das in einem einzigen Arbeitsgang eine wirksame Vernichtung des Überwinterungsraums des Maiszünslers ermöglicht.

### Erfindung

Die vorliegende Erfindung wird durch die Ansprüche definiert.

Eine Reiheneinheit für ein Maiserntegerät umfasst eine an der Unterseite der Reiheneinheit angeordnete Einrichtung zum Herausziehen und Zerkleinern von Pflanzenstoppeln während eines Erntevorgangs. Auf diese Weise werden die Pflanzenstoppeln bereits während des Erntevorgangs aus der Erde gezogen und zerkleinert, sodass der Überwinterungsraum des Maiszünslers auf einfache, aber effektive Weise zerstört wird.

Bei einer bevorzugten Ausführungsform umfasst die Einrichtung zwei zusammenwirkende, um in der Vorwärtsrichtung der Reiheneinheit orientierte Drehachsen antreibbare Stoppelziehwalzen, die gegensinnig antreibbar und vorzugsweise mit Schneidkanten ausgestattet sind, um die Pflanzenstoppeln zwischen sich aus dem Erdboden herauszuziehen und zu zerkleinern.

Die Einrichtung kann antriebsmäßig mit der Reiheneinheit gekoppelt werden, d.h. ihre beweglichen Elemente werden durch ein Getriebe der Reiheneinheit angetrieben.

Die Reiheneinheit ist insbesondere als Pflücker ausgeführt, d.h. sie umfasst in an sich bekannter Weise zwei zusammenwirkende, um in der Vorwärtsrichtung der Reiheneinheit orientierte Drehachsen antreibbare Pflückwalzen, die gegensinnig antreibbar sind, um die Stängel der Pflanzen zwischen sich nach unten einzuziehen, und einen oberhalb der Pflückwalzen angeordneten Pflückspalt zum Abtrennen der Fruchtstände der Pflanzen. Es wäre jedoch auch denkbar, die Reiheneinheit als reihenunabhängige Mäh- und Einzugseinheit zur Verwendung an einem Feldhäcksler auszuführen, d.h. mit einer unteren Schneidscheibe und darüber angeordneten Förderscheiben mit um ihren Umfang verteilten Aussparungen zur Aufnahme der Pflanzen auszuführen und die erwähnte Einrichtung darunter anzubringen.

Die Einrichtung kann sich insbesondere ausschließlich im bezüglich der Vorwärtsrichtung der Reiheneinheit rückwärtigen Bereich der Reiheneinheit befinden.

Die Pflückwalzen können mit Schneidkanten zum Zerkleinern der Pflanzenstängel ausgestattet sein, um die Pflanzenstängel zu zerkleinern. Alternativ oder zusätzlich kann hierzu zwischen den Pflückwalzen und der Einrichtung ein um die Hochachse rotierender Stängelhäcksler angeordnet sein. Ein weiterer Vorteil des Zerhäckselns der Pflanzenstängel liegt darin, dass derselbe Pflanzenstängel nicht gleichzeitig durch die Reiheneinheit (insbesondere deren Pflückwalzen) und die Einrichtung bearbeitet wird, was zu Einfädelproblemen in die Einrichtung führen könnte.

Zwischen den Pflückwalzen und der Einrichtung kann ein horizontales Trennblech angeordnet sein.

### Ausführungsform

Die Figuren zeigen eine Ausführungsform der Erfindung, wobei die Bezugszeichen nicht zu einer einschränkenden Auslegung der Patentansprüche herangezogen werden dürfen:
- Fig. 1: zeigt eine seitliche Ansicht einer selbstfahrenden Erntemaschine mit einem Maiserntegerät in Form eines Maispflückers, an dessen Unterseite eine erfindungsgemäße Einrichtung zum Herausziehen und Zerkleinern von Pflanzenstoppeln angebracht ist, und
- Fig. 2: einen senkrechten Schnitt durch das Maiserntegerät entlang der Linie 2-2 der Figur 1.

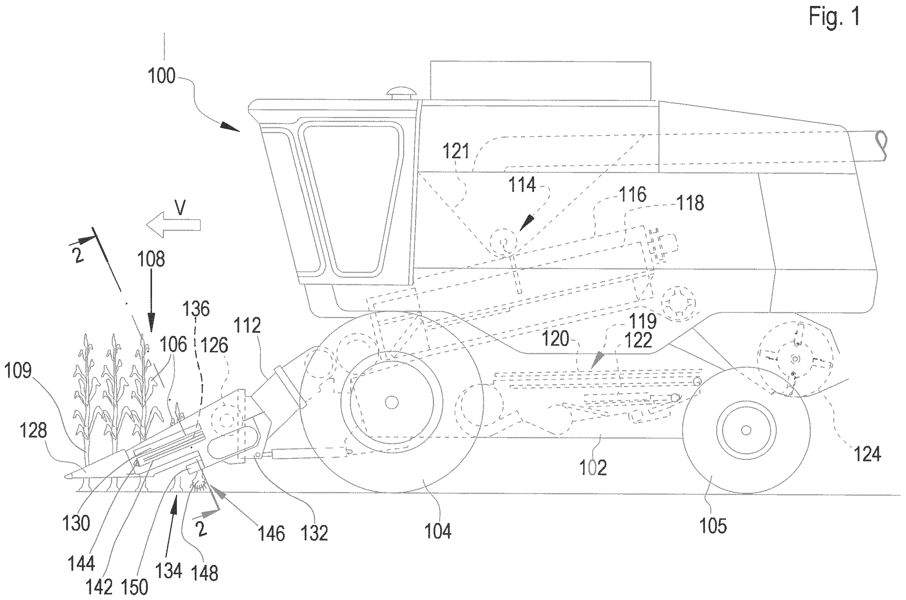

Die Figur 1 zeigt eine selbstfahrende Erntemaschine 100 in der Art eines Mähdreschers. Die Erntemaschine 100 umfasst ein sich auf vorderen, angetriebenen Rädern 104 und rückwärtigen, lenkbaren Rädern 105 abgestütztes Fahrgestell 102, an dessen Vorderseite ein Einzugsförderer 112 angeordnet ist, der im Betrieb von einem an seiner Vorderseite lösbar befestigten Maiserntegerät 108 aufgenommenes Erntegut einer Dresch- und Trenneinrichtung zuführt, die hier aus einem axialen Rotor 118 und einem Gehäuse 116 aufgebaut ist. Ausgedroschene Körner werden in einer Reinigung 119 mit einem Obersieb 120 und einem Untersieb 122 gereinigt und einem Korntank 121 zugeführt, aus dem sie mittels eines Förderers 114 auf ein Transportfahrzeug überladen werden können. An der Rückseite der Dresch- und Trenneinrichtung ausgeworfene Erntegutreste werden mittels eines Strohhäckslers 124 zerkleinert und auf dem Feld verteilt.

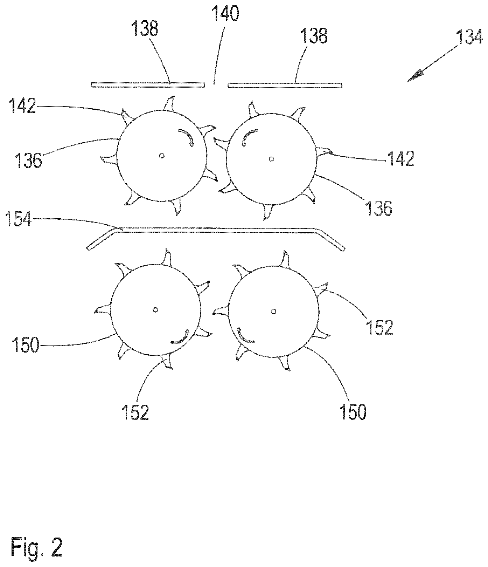

Das Maiserntegerät 108 umfasst einen Rahmen 132, der eine Anzahl an seitlich nebeneinander angeordneten Reiheneinheiten 134 zum Pflücken von Maispflanzen 106 umfasst, zwischen denen jeweils Teilerspitzen 128 angeordnet ist. Die Reiheneinheiten 134 umfassen jeweils zwei Pflückwalzen 136, welche die Stängel 109 der Maispflanzen 106 zwischen sich nach unten einziehen und darüber angeordnete Kettenförderer 130, die an einen Pflückspalt 140 (vgl. Figur 2) bildenden Abstreifblechen 138 von den Stängeln 109 getrennte Kolben nach hinten abfördern, wo sie über eine Querförderschnecke 126 dem Einzugsförderer 112 zugeführt werden. Die Pflückwalzen 136 sind in ihren vorderen Bereichen 144 konisch und mit Förderwendeln und in ihren hinteren Bereichen mit axialen Schneidkanten 142 versehen, welche die Stängel 109 zerkleinern.

Im rückwärtigen Bereich der Reiheneinheiten 134 ist unterhalb der Pflückwalzen 136 jeweils eine Einrichtung 146 zum Herausziehen und Zerkleinern von Pflanzenstoppeln 148 angeordnet, die zwei Stoppelziehwalzen 150 umfasst, die zumindest näherungsweise parallel zu den Pflückwalzen 136 orientiert sind. Die Stoppelziehwalzen 150 drehen sich gegensinnig mit den in der Figur 2 gezeigten Drehrichtungen, d.h. jeweils gegensinnig zur darüber angeordneten Pflückwalze136 und sind mit Schneidkanten 152 ausgestattet. Die Stoppelziehwalzen 150 können, analog den Pflückwalzen 136, an ihren vorderen Enden konisch geformt und mit einer Förderwendel versehen sein, um die Pflanzenstoppeln 148 besser zwischen sich einführen zu können. Zwischen den Stoppelziehwalzen 150 und den Pflückwalzen 136 ist ein horizontales Trennblech 154 angebracht.

Die Funktionsweise der Reiheneinheiten 134 ist derart, dass die Pflückwalzen 136 beim Erntebetrieb die Stängel 109 der Pflanzen 106 zwischen sich nach unten ziehen und zerkleinern und das Häckselgut auf dem Feld verteilen. Dabei werden die Stängel 109 auch von den Pflanzenstoppeln 148 abgetrennt, die zunächst auf dem Feld stehenbleiben. Diese Pflanzenstoppeln 148 werden kurz danach von den Schneidkanten 152 der Stoppelziehwalzen 150 erfasst und nach oben aus dem Erdboden gezogen und zerkleinert. Dabei ist es möglich, dass die Pflanzenstoppeln 148 im Bereich ihrer Knollen abreißen. Die Wirkung der Einrichtung 146 reicht jedenfalls hin, den Überwinterungsraum der Maiszünsler hinreichend zu zerstören, sodass eine erfolgreiche Bekämpfung möglich ist.

Es bleibt anzumerken, dass die Form der Stoppelziehwalzen 150 anders als in der Figur 2 dargestellt sein kann. Sie könnte beispielsweise sternförmig sein, wobei Vorsprünge einer Stoppelziehwalze 150 jeweils in eine Ausbuchtung einer anderen Stoppelziehwalze 150 eingreifen und die Vorsprünge auch zum Zerschneiden dienen. Es können auch beliebige, an sich bekannte Pflückwalzen (vgl. beispielsweise FR 2 784 263 B3) Verwendung finden, die mit Schneidmitteln zur Stängelzerkleinerung versehen sind, jedoch gegenüber ihrer Anordnung im Pflücker in umgekehrter Richtung drehen. Weiterhin wäre denkbar, die Stoppelziehwalzen 150 nur zum Herausziehen der Pflanzenstoppel 148 zu verwenden und letztere durch einen separaten Häcksler, wie er ansonsten als Stängelhäcksler verwendet wird, zu zerkleinern (vgl. DE 10 2014 213 419 A1 und den dort zitierten Stand der Technik).

## Patentansprüche

1. Reiheneinheit (134) für ein Maiserntegerät (108), mit einer an der Unterseite der Reiheneinheit (146) angeordneten Einrichtung (146) zum Zerkleinern von Pflanzenstoppeln (148) während eines Erntevorgangs, **dadurch gekennzeichnet, dass** die Einrichtung (146) zum Herausziehen der Pflanzenstoppel (148) ausgebildet ist.

2. Reiheneinheit (134) nach Anspruch 1, wobei die Einrichtung (146) zwei zusammenwirkende, um in der Vorwärtsrichtung der Reiheneinheit (134) orientierte Drehachsen antreibbare Stoppelziehwalzen (150) umfasst, die gegensinnig antreibbar sind, um die Pflanzenstoppeln (148) zwischen sich aus dem Erdboden herauszuziehen und zu zerkleinern.

3. Reiheneinheit (134) nach Anspruch 2, wobei die Stoppelziehwalzen (150) mit Schneidkanten (152) ausgestattet sind.

4. Reiheneinheit (134) nach einem der Ansprüche 1 bis 3, wobei die Einrichtung (146) antriebsmäßig mit der Reiheneinheit (134) gekoppelt ist.

5. Reiheneinheit (134) nach einem der vorhergehenden Ansprüche, wobei die Reiheneinheit (134) zwei zusammenwirkende, um in der Vorwärtsrichtung (V) der Reiheneinheit (134) orientierte Drehachsen antreibbare Pflückwalzen (136) umfasst, die gegensinnig antreibbar sind, um die Stängel (109) der Pflanzen (106) zwischen sich nach unten einzuziehen, und einen oberhalb der Pflückwalzen (136) angeordneten Pflückspalt (140) zum Abtrennen der Fruchtstände der Pflanzen (106) aufweist.

6. Reiheneinheit (134) nach Anspruch 5, wobei sich die Einrichtung (146) nur im bezüglich der Vorwärtsrichtung der Reiheneinheit (134) rückwärtigen Bereich der Reiheneinheit (134) befindet.

7. Reiheneinheit (134) nach Anspruch 5 oder 6, wobei die Pflückwalzen (136) mit Schneidkanten (142) zum Zerkleinern der Pflanzenstängel (109) ausgestattet sind und/oder zwischen den Pflückwalzen (136) und der Einrichtung (146) ein um die Hochachse rotierender Stängelhäcksler angeordnet ist.

8. Reiheneinheit (134) nach einem der Ansprüche 5 bis 7, wobei zwischen den Pflückwalzen (136) und der Einrichtung (146) ein horizontales Trennblech (154) angeordnet ist.

9. Maiserntegerät (108) mit einer Reiheneinheit (134) nach einem der Ansprüche 1 bis 8.

## Claims

1. Row unit (134) for a maize harvesting device (108), with a device (146) arranged on the lower side of the row unit (146) for chopping plant stubble (148) during a harvesting operation, **characterized in that** the device (146) is designed for pulling out the plant stubble (148).

2. Row unit (134) according to Claim 1, wherein the device (146) comprises two interacting stubble-pulling rollers (150) which are drivable about axes of rotation oriented in the forwards direction of the row unit (134) and are drivable in opposite directions in order to pull the plant stubble (148) out of the ground between them and to chop said plant stubble.

3. Row unit (134) according to Claim 2, wherein the stubble-pulling rollers (150) are provided with cutting edges (152).

4. Row unit (134) according to one of Claims 1 to 3, wherein the device (146) is coupled in terms of drive to the row unit (134).

5. Row unit (134) according to one of the preceding claims, wherein the row unit (134) comprises two interacting plucking rollers (136) which are drivable about axes of rotation oriented in the forwards direction (V) of the row unit (134) and are drivable in opposite directions in order to downwardly collect the stalks (109) of the plants (106) between them, and said row unit has a plucking gap (140) arranged above the plucking rollers (136) for separating off the seed heads of the plants (106).

6. Row unit (134) according to Claim 5, wherein the device (146) is located only in the rearward region of the row unit (134) with respect to the forwards direction of the row unit (134).

7. Row unit (134) according to Claim 5 or 6, wherein the plucking rollers (136) are provided with cutting edges (142) for chopping the plant stalks (109), and/or a stalk chopper rotating about the vertical axis is arranged between the plucking rollers (136) and the device (146).

8. Row unit (134) according to one of Claims 5 to 7, wherein a horizontal separating plate (154) is arranged between the plucking rollers (136) and the device (146).

9. Maize harvesting device (108) with a row unit (134) according to one of Claims 1 to 8.

## Revendications

1. Unité de rangée (134) pour un appareil de moisson de maïs (108), comprenant un dispositif (146) disposé au niveau du côté inférieur de l'unité de rangée (146) pour broyer les chaumes (148) pendant une moisson, **caractérisée en ce que** le dispositif (146) est réalisé pour arracher les chaumes (148).

2. Unité de rangée (134) selon la revendication 1, dans laquelle le dispositif (146) comprend deux cylindres d'arrachage de chaumes (150) coopérant, pouvant être entraînés autour d'axes de rotation orientés dans la direction d'avance de l'unité de rangée (134), qui peuvent être entraînés en sens inverse afin d'arracher entre eux les chaumes (148) du sol et de les broyer.

3. Unité de rangée (134) selon la revendication 2, dans laquelle les cylindres d'arrachage de chaumes (150) sont munis d'arête de coupe (152).

4. Unité de rangée (134) selon l'une quelconque des revendications 1 à 3, dans laquelle le dispositif (146) est accouplé par entraînement à l'unité de rangée (134).

5. Unité de rangée (134) selon l'une quelconque des revendications précédentes, dans laquelle l'unité de rangée (134) comprend deux cylindres de cueillage (136) coopérant, pouvant être entraînés autour d'axes de rotation orientés dans la direction d'avance (V) de l'unité de rangée (134), qui peuvent être entraînés en sens inverse, afin de prendre entre eux les tiges (109) des végétaux (106) vers le bas, et présente une fente de cueillage (140) disposée au-dessus des cylindres de cueillage (136) pour séparer les épis des végétaux (106).

6. Unité de rangée (134) selon la revendication 5, dans laquelle le dispositif (146) se trouve seulement dans la région de l'unité de rangée (134) arrière par rapport à la direction d'avance de l'unité de rangée (134).

7. Unité de rangée (134) selon la revendication 5 ou 6, dans laquelle les cylindres de cueillage (136) sont munis d'arêtes de coupe (142) pour broyer les tiges des végétaux (109) et/ou entre les cylindres de cueillage (136) et le dispositif (146) est disposé un hache-tige tournant autour de l'axe vertical.

8. Unité de rangée (134) selon l'une quelconque des revendications 5 à 7, dans laquelle une tôle de séparation horizontale (154) est disposée entre les cylindres de cueillage (136) et le dispositif (146).

9. Appareil de moisson de maïs (108) comprenant une unité de rangée (134) selon l'une quelconque des revendications 1 à 8.
